# FASCICULE DE BREVET EUROPEEN

(11) **EP 2 806 212 B1**
(45) Date de publication et mention de la délivrance du brevet: **18.10.2017**
(21) Numéro de dépôt: 14165692.6
(22) Date de dépôt: 23.04.2014
(51) Int. Cl.: F22B 35/18, G05B 19/042, G05B 9/03

(54) **Système et procédé de contrôle d'une installation sous pression, et installation équipée d'un tel système**
Kontrollsystem und -verfahren einer Anlage unter Druck, und mit einem solchen System ausgestattete Anlage
System and method for controlling a facility under pressure, and facility provided with such a system

(30) Priorité: 24.04.2013 FR 1353748
(43) Date de publication de la demande: 26.11.2014
(73) Titulaire: DALKIA, 59350 Saint-André-lez-Lille (FR)
(72) Inventeur: Kotlarek, David, 42740 Saint Paul en Jarez (FR)
(74) Mandataire: Lavoix

(56) Documents cités:
- EP-A1- 0 206 587
- EP-A2- 0 057 453
- WO-A1-89/09996
- WO-A1-2010/121797
- DE-A1-102004 015 616
- JP-A- 2013 052 354

## Description

La présente invention concerne un système de contrôle d'une installation sous pression, hors périmètre nucléaire, notamment un système de contrôle d'un équipement sous pression du type chaudière à production de vapeur ou d'eau surchauffée. Une telle installation peut comporter un ou plusieurs équipements sous pression. L'invention concerne également un procédé de contrôle d'une installation sous pression. L'invention concerne enfin une installation sous pression équipée d'un tel système de contrôle.

Le domaine de l'invention est celui des installations sous pression, en particulier les chaudières appelées « générateurs », alimentant en énergie les logements individuels ou collectifs, ou bien les clients industriels hors périmètre nucléaire.

En pratique, de telles installations peuvent fonctionner soit en présence permanente d'un opérateur, appelée « Présence Humaine Permanente », soit en programmant des visites périodiques, appelée « Sans Présence Humaine Permanente ». Selon les périodicités, les visites sont couplées aux tests de vérification des sécurités de l'installation.

A ce jour, il existe de nombreuses réglementations applicables aux installations sous pression, telles que les générateurs, en termes d'exploitation et de sécurité. En France, la norme NFE32020 a notamment laissé place à la Directive 97/23/CE et au cahier des charges Aquap 2007/01.

Afin de faire fonctionner une installation de chaudière sous pression sans présence humaine permanente en chaufferie, il est connu différents systèmes de contrôle comprenant des capteurs de mesure intégrés à la chaudière, une chaîne de sécurité à relais et un automate de gestion des tests. Depuis les années 1980, la chaîne à relais est généralement déjà intégrée aux chaudières existantes. Cette chaîne à relais regroupe toutes les sécurités nécessaires au bon fonctionnement de la chaudière et permet à un opérateur habilité de conduire la chaudière en mode présence humaine permanente lors de ses vérifications. La chaîne comprend des relais de shunt, c'est-à-dire des contacts électriques permettant de court-circuiter une sécurité dans la chaîne lors des tests périodiques. Les délais des visites périodiques peuvent varier entre 4, 8 ou 24 heures, tandis que les délais de vérification des sécurités sont de 24 à 72 heures maximum.

Dans un tel système de contrôle, l'automate contrôle les délais des visites périodiques à 72 heures maximum. L'automate agit par l'intermédiaire des relais de shunt sur les dispositifs de sécurité de la chaîne à relais. Lors des tests périodiques, l'opérateur doit vérifier le bon fonctionnement des capteurs tout en maintenant la production d'énergie, sans pouvoir s'affranchir de la chaîne à relais en présence permanente. Ce système présente un nombre important de relais et un câblage électrique complexe, ce qui réduit la fiabilité des tests. Ce système fonctionne en tout ou rien et ne permet donc pas de traiter des signaux analogiques. Autrement dit, ce système n'offre pas de traçabilité relative au comportement des équipements et des capteurs intégrés à la chaudière. En outre, le système ne permet pas de vérifier pendant 72 heures la défaillance d'un équipement de sécurité, par exemple une sonde en court-circuit ou un piquage bouché.

Il est connu, par exemple de DE-A-10 2004 015616, d'utiliser une première et une deuxième chaînes de sécurité pour un système de contrôle, chacune reliée à un bloc de fonction. La première chaîne de sécurité est dédiée à des capteurs analogiques, alors que la deuxième chaîne est dédiée à des capteurs digitaux.

Il est également connu des systèmes de contrôle d'installations nucléaires sous pression, par exemple des documents EP-A-0 057 453 et EP-A-0 206 587, mais ceux-ci sont bien plus complexes que le système de contrôle défini par la présente invention. En pratique, les applications nucléaires présentent des contraintes techniques et réglementaires bien spécifiques et sont exclues du cadre de l'invention.

Le but de la présente invention est de proposer un système et un procédé de contrôle améliorés, remédiant aux inconvénients de l'art antérieur.

A cet effet, l'invention a pour objet un système de contrôle d'une installation sous pression, hors périmètre nucléaire, notamment une installation de chaudière adaptée pour exploitation sans présence humaine permanente. Ce système de contrôle est caractérisé en ce qu'il comprend au moins :
- deux chaînes de mesure indépendantes, parmi lesquelles :
   - une première chaîne de mesure est adaptée pour équiper une première partie de l'installation et mesurer des paramètres caractéristiques du fonctionnement de cette première partie, et
   - une deuxième chaîne de mesure est adaptée pour équiper une deuxième partie de l'installation et mesurer des paramètres caractéristiques du fonctionnement de cette deuxième partie ;
- deux automates programmables, parmi lesquels un premier automate est raccordé à la première chaîne de mesure et un deuxième automate est raccordé à la deuxième chaîne de mesure, les deux automates en communication comparant les paramètres caractéristiques de la première partie et les paramètres caractéristiques de la deuxième partie pour détecter un fonctionnement anormal de l'installation ou des chaînes de mesure, de manière à transmettre une alerte de sécurité en vue d'une intervention de maintenance et/ou à activer des moyens de protection équipant l'installation ; et
- un terminal de pilotage du système de contrôle, en communication avec au moins l'un des deux automates, recevant l'alerte de sécurité si un fonctionnement anormal de l'installation est détecté.

Le système est également caractérisé en ce que chaque chaîne de mesure comprend un capteur de niveau de fluide et un capteur de pression, agencés dans la partie de l'installation équipée de cette chaîne de mesure, la détection d'un niveau de fluide anormal provoquant une remise à niveau du fluide dans la partie concernée de l'installation, la détection d'une pression anormale provoquant un verrouillage de sécurité dans l'installation, et en ce que chaque chaîne de mesure comprend un capteur de débit de fluide et un capteur de pression, agencés dans la partie de l'installation équipée de cette chaîne de mesure, la détection d'un débit de fluide anormal et/ou d'une pression anormale provoquant un verrouillage de sécurité dans l'installation.

Ainsi, l'invention permet d'améliorer la fiabilité du contrôle de l'installation, avec des interventions périodiques portées de 24 heures à 72 heures, tout en satisfaisant aux différentes réglementations en vigueur. Le système de contrôle selon l'invention peut être intégré à une nouvelle installation dès sa fabrication ou à une installation déjà existante, de manière simple et pratique grâce à ses éléments constitutifs standardisés. Lors d'une intervention de maintenance, le système fonctionne en mode présence permanente, l'une des chaînes de mesure et l'automate associé peuvent être désactivés, tandis que l'autre chaîne de mesure et l'automate associé assurent le contrôle de l'installation. Le système se présente sous forme d'un module validé par l'Apave et facilement adaptable à tous types d'installations. Le système fournit une solution entièrement automatisable, autocontrôlée, renforcée en sécurité et communicante selon de nombreux protocoles. Le système autorise une indépendance entre les sécurités de la chaudière et du brûleur, ainsi qu'avec la gestion des communs.

Selon d'autres caractéristiques avantageuses du système selon l'invention, prises isolément ou en combinaison :
- Le système de contrôle comprend également des moyens de mesure de conductivité d'un fluide dans l'installation, raccordés à au moins l'un des deux automates, de préférence à la fois au premier automate et au deuxième automate, la détection d'une conductivité anormale provoquant une purge de l'installation.
- Le système de contrôle comprend des moyens additionnels de mesure d'un niveau de fluide dans l'installation, ces moyens de mesure comprenant un capteur auxiliaire raccordé à au moins l'un des deux automates et adapté pour mesurer le niveau de fluide lorsque l'autre des deux automates est désactivé durant une intervention de maintenance.
- Le terminal de pilotage est adapté pour transmettre l'alerte et/ou les paramètres caractéristiques à au moins un dispositif auxiliaire, par exemple un serveur internet et/ou courriel, un dispositif de télégestion, un ordinateur de supervision, un brûleur à came numérique intégré à l'installation, un dispositif de comptage et/ou un dispositif amovible de sauvegarde.
- Selon une variante particulière, le système de contrôle comprend trois chaînes de mesure indépendantes et trois automates programmables, chacun raccordé à une chaine de mesure, avec deux automates qui assurent la régulation et la sécurité de l'installation tandis que le troisième automate assure uniquement la sécurité de l'installation.
- Les moyens de protection comprennent au moins : un dispositif de remise à niveau du fluide dans l'installation, un dispositif à relais avec contrôle de position, adapté pour réaliser un verrouillage de sécurité dans l'installation, et un dispositif de purge de l'installation.

L'invention a également pour objet un procédé de contrôle d'une installation sous pression, hors périmètre nucléaire, notamment une installation de chaudière adaptée pour exploitation sans présence humaine permanente, le procédé étant caractérisé en ce qu'il comprend au moins les étapes suivantes :
- une étape de mesure de paramètres caractéristiques de l'installation via deux chaînes de mesure indépendantes, parmi lesquelles :
   - une première chaîne de mesure équipe une première partie de l'installation et mesure des paramètres parmi lesquels au moins un niveau de fluide, une pression et un débit de fluide dans l'installation, ces paramètres étant caractéristiques du fonctionnement de cette première partie, et
   - une deuxième chaîne de mesure équipe une deuxième partie de l'installation et mesure des paramètres parmi lesquels au moins un niveau de fluide, une pression et un débit de fluide dans l'installation, ces paramètres étant caractéristiques du fonctionnement de cette deuxième partie ;
- une étape de comparaison des paramètres caractéristiques du fonctionnement de la première partie et de la deuxième partie pour détecter un fonctionnement anormal de l'installation, cette étape de comparaison étant réalisée de manière continue en parallèle de l'étape de mesure par l'intermédiaire de deux automates programmables en communication, parmi lesquels un premier automate est raccordé à la première chaîne de mesure et un deuxième automate est raccordé à la deuxième chaîne de mesure ;
- une étape de signalement, réalisée si un fonctionnement anormal de l'installation ou des chaînes de mesure est détecté dans l'étape de comparaison, cette étape de signalement consistant à transmettre une alerte de sécurité depuis au moins l'un des deux automates vers un terminal de pilotage en vue d'une intervention de maintenance et/ou à activer via les deux automates des moyens de protection équipant l'installation.
Le procédé est également caractérisé en ce que :
- dans l'étape de signalement, la détection d'un niveau de fluide anormal provoque une remise à niveau du fluide dans la partie concernée de l'installation, tandis que la détection d'un débit de fluide anormal et/ou d'une pression anormale provoque un verrouillage de sécurité dans l'installation.

Selon d'autres caractéristiques avantageuses du procédé selon l'invention, prises isolément ou en combinaison :
- Dans l'étape de comparaison, un fonctionnement anormal de l'installation est détecté par les automates si les chaînes de mesure ont mesuré un écart supérieur à 10% entre l'un des paramètres caractéristiques de la première partie et l'un des paramètres caractéristiques de la deuxième partie de l'installation.
- Selon une variante particulière, l'étape de mesure de paramètres caractéristiques de l'installation est réalisée via trois chaînes de mesure indépendantes ; et l'étape de comparaison des paramètres caractéristiques est réalisée par l'intermédiaire de trois automates programmables, chacun raccordé à une chaine de mesure, avec deux automates qui assurent la régulation et la sécurité de l'installation tandis que le troisième automate assure uniquement la sécurité de l'installation.

L'invention a également pour objet une installation sous pression, hors périmètre nucléaire, notamment une installation de chaudière adaptée pour exploitation sans présence humaine permanente, caractérisée en ce qu'elle est équipée d'un système de contrôle tel que mentionné ci-dessus. En pratique, une telle installation peut produire de la vapeur ou de l'eau surchauffée, par l'intermédiaire de combustibles gazeux ou au moyen de tout fluide adapté à la présente application.

L'invention sera mieux comprise à la lecture de la description qui va suivre, donnée uniquement à titre d'exemple non limitatif et faite en référence aux dessins annexés sur lesquels :
- la figure 1 est une représentation schématique d'une installation sous pression conforme à l'invention, du type chaudière à production de vapeur, équipée d'un système de contrôle également conforme à l'invention, partiellement représenté ; et
- la figure 2 est une représentation schématique du système de contrôle montré à la figure 1 ;
- la figure 3 est une représentation schématique analogue à la figure 1, montrant une installation sous pression conforme à un deuxième mode de réalisation de l'invention, du type chaudière à production d'eau surchauffée, équipée d'un système de contrôle également conforme à l'invention, partiellement représenté.

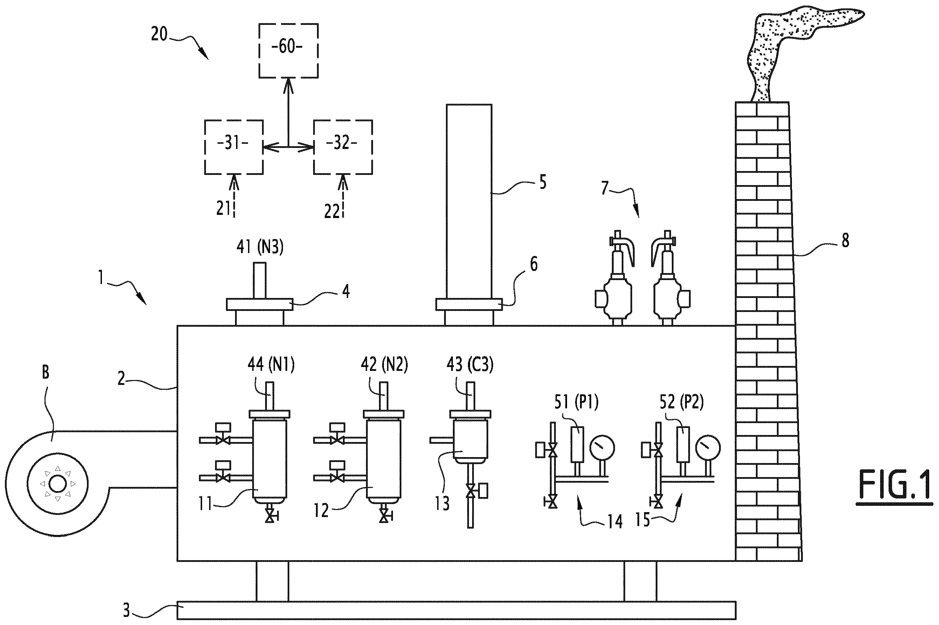

Sur la figure 1 est représentée une installation sous pression, du type installation de chaudière 1 à production de vapeur, conforme à l'invention.

La chaudière 1 comprend un corps de chaudière 2, un socle 3, une tubulure 4, une conduite 5 de prise de vapeur, une tubulure de départ vapeur 6, une ou des soupapes de sécurité 7 et une cheminée 8. Les équipements agencés dans le corps 2 ou hors du corps 2 de la chaudière 1 ne sont pas tous représentés dans un but de simplification. Par exemple, la chaudière 1 comprend un dispositif d'alimentation en combustible, non représenté à la figure 1. Des bouteilles 11 et 12, un dispositif 13 de purge appelée « déconcentration » et des circuits hydrauliques de mesure de pression 14 et 15 sont disposés à l'extérieur du corps 2 et raccordés à l'intérieur de la chaudière 1.

Un brûleur B est raccordé au corps 2 de la chaudière 1. Ce brûleur B est indépendant des autres éléments constitutifs de la chaudière 1 et peut disposer de son propre système de contrôle.

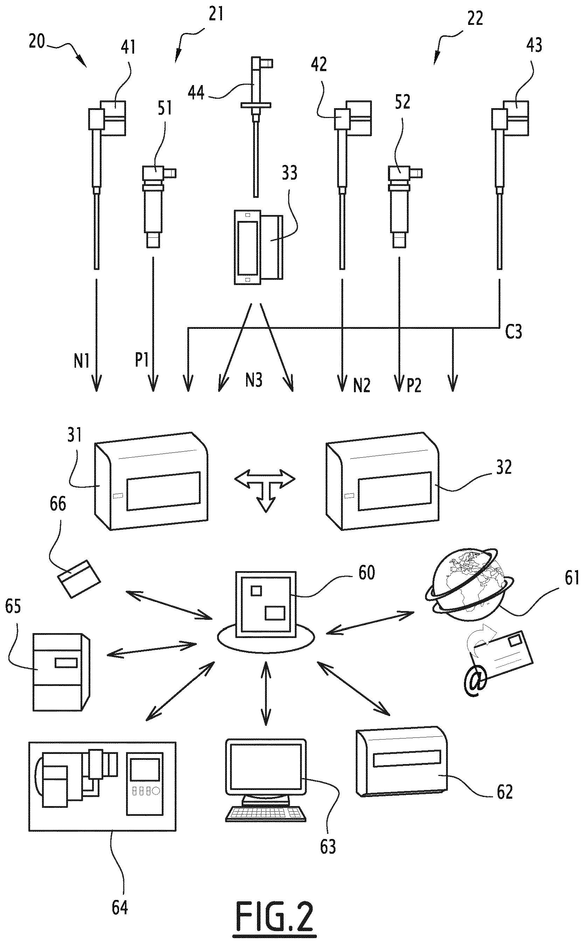

Dans le cadre de l'invention, la chaudière 1 est équipée d'un système de contrôle 20, représenté partiellement et schématiquement à la figure 1, montré plus en détail à la figure 2. Avantageusement, le système 20 de contrôle de la chaudière 1 est indépendant du système de contrôle du brûleur B. Le système 20 est adapté pour détecter un fonctionnement anormal de la chaudière 1, émettre une alerte de sécurité et activer des dispositifs de protection de la chaudière 1. Les éléments 11 à 15 de la chaudière 1 sont dits « testables », dans la mesure où ils peuvent être équipés de moyens de mesure appartenant au système 20, comme détaillé ci-après.

Le système 20 comprend deux chaînes de mesure 21 et 22, deux automates programmables 31 et 32, un dispositif de liaison 33, différents capteurs 41, 42, 43, 44, 51 et 52, ainsi qu'un terminal de pilotage 60. La première chaîne de mesure 21 inclut les capteurs 41 et 51 et est reliée au premier automate 31. La deuxième chaîne de mesure 22 inclut les capteurs 42 et 52 et est reliée au deuxième automate 32. Les capteurs 43 et 44 sont connectés aux deux automates 31 et 32. En d'autres termes, on peut considérer que les capteurs 43 et 44 appartiennent simultanément aux chaînes 21 et 22. Toutes les informations captées sont directement raccordées sur les entrées des automates 31 et 32, ce qui permet de filtrer ces informations et tracer tous les changements d'états. Les capteurs 41 à 44 se présentent sous forme de sondes, chacune plongée dans l'eau en un point donné de la chaudière 1. Les capteurs 51 et 52 sont connectés à la tuyauterie de la chaudière 1.

Les deux chaînes de mesure 21 et 22 sont indépendantes. La première chaîne de mesure 21 est adaptée pour équiper une première partie 11+14 de la chaudière 1, en l'espèce la bouteille 11 équipée avec la sonde 41 et le circuit 14 équipé avec le capteur 51. La chaîne 21 permet de mesurer des paramètres N1 et P1 caractéristiques du fonctionnement de cette partie 11+14, plus précisément un niveau de liquide N1 dans la bouteille 11 et une pression P1 dans le circuit 14. La deuxième chaîne de mesure 22 est adaptée pour équiper une deuxième partie 12+15 de la chaudière 1, en l'espèce la bouteille 12 équipée avec la sonde 42 et le circuit 15 équipé avec le capteur 52. La chaîne 22 permet de mesurer des paramètres N2 et P2 caractéristiques du fonctionnement de cette partie 12+15, plus précisément un niveau de liquide N2 dans le ballon 12 et une pression P2 dans le circuit 15.

Les sondes 41 et 42 forment des moyens de mesure analogique équipant les bouteilles extérieures testables 11 et 12. Les sondes 41 et 42 permettent de mesurer en continu le niveau de liquide N1 et N2 dans chacune de ces bouteilles 11 et 12. Les niveaux mesurés en bouteilles 11 et 12 correspondent au niveau dans la chaudière 1. Grâce au système 20, la détection d'un niveau d'eau N1 ou N2 anormal provoque une remise à niveau de l'eau dans la chaudière 1. Dans ce cas, le système 20 active des moyens de protection de la chaudière 1, plus précisément un dispositif de remise à niveau de l'eau dans cette chaudière 1 via une vanne d'arrivée d'eau.

La sonde 43 forme un moyen de mesure d'un paramètre de conductivité C3 du fluide, en l'espèce de l'eau, circulant dans la chaudière 1. De préférence, par simplicité, la sonde 43 équipe directement le dispositif 13 de purge de la chaudière 1. Au sein du système 20, la conductivité C3 peut être traitée comme une valeur analogique ou par état tout ou rien. Le système 20 fonctionne avec un seuil d'alerte haut relatif à la conductivité C3, afin d'éviter des temps d'arrêt et une maintenance coûteuse de la chaudière 1. La sonde 43 peut être raccordée à l'un des deux automates 31 et 32, de préférence à la fois aux deux automates 31 et 32. La détection d'une conductivité C3 anormale provoque une purge appelée « déconcentration » de la chaudière 1, ceci de manière automatique et immédiate. Dans ce cas, le système 20 active des moyens de protection de la chaudière 1, en particulier le dispositif 13 de purge de cette chaudière 1.

La sonde 44 forme un moyen additionnel de mesure d'un niveau d'eau N3 dans ou hors de la chaudière 1, disposé sur l'exemple de la figure 1 au niveau de la tubulure 4, au sommet du corps 2 de cette chaudière 1. La sonde 44 est prévue pour communiquer via le dispositif 33 de liaison avec les automates 31 ou 32. La sonde 44 est adaptée pour mesurer le niveau de l'eau N3 en continu et peut être désactivée durant une intervention de maintenance, dès lors que les deux sondes 41 et 42 ainsi que les automates associés 31 et 32 fonctionnent. La sonde 44 est un capteur de sécurité autocontrôlé de niveau très bas, agrée par la réglementation, comportant deux sorties indépendantes d'état tout ou rien. Dans l'art antérieur, certains systèmes de contrôle sont équipés d'une unique sonde de contrôle de niveau, telle que la sonde 44. Selon l'invention, il est possible à un opérateur de disposer de trois moyens de contrôle visuels, à savoir les sondes 41, 42 et 44, pour lesquels les niveaux sont affichés sur le terminal 60

Les capteurs 51 et 52 forment des moyens de mesure analogique équipant les circuits hydrauliques 14 et 15. Les capteurs 51 et 52 permettent de mesurer en continue la pression P1 ou P2 dans chacun de ces circuits 14 et 15. Les pressions P1 et P2 mesurées correspondent à la pression de la chaudière 1. Grâce au système 20, la détection d'une pression 11 ou 12 anormale provoque un verrouillage de sécurité dans la chaudière 1. Dans ce cas, le système 20 active des moyens de protection de la chaudière 1, plus précisément un dispositif à relais.

Les automates 31 et 32 sont adaptés pour gérer les différentes alarmes techniques de sécurité améliorant la fiabilité de la chaudière 1 et le confort de son exploitation. Les automates 31 et 32 sont en outre adaptés pour activer les moyens de protection intégrés au système de contrôle 20. Ces moyens de protection comprennent notamment, pour chacun des automates 31 et 32, un dispositif à deux relais distincts autocontrôlés par l'automate 31 ou 32 correspondant, ce dispositif remplaçant la chaîne à relais de l'art antérieur. Chaque paire de relais, pilotée et contrôlée par l'un des automates 31 et 32, permet le verrouillage de la chaudière 1 lorsqu'un dysfonctionnement de sécurité nécessitant l'arrêt immédiat est détecté, par exemple un excès de pression. A chaque réarmement de ces relais, l'automate 31 ou 32 peut vérifier leur fonctionnement correct. Les automates 31 et 32 permettent de réguler le niveau d'eau N1 ou N2 dans la chaudière 1. En effet, pour fabriquer de la vapeur, un niveau d'eau sensiblement constant doit être maintenu dans la chaudière. Pour cela, le système 20 peut piloter une vanne de régulation ou bien les pompes de remplissage entre deux niveaux prédéterminés. Optionnellement, au moins l'un des automates peut être adapté pour gérer la charge du brûleur B.

Les automates 31 et 32 présentent de préférence une construction similaire, ce qui est économique et plus simple à gérer. Les automates 31 et 32 sont configurés pour communiquer l'un avec l'autre via des câblages prévus à cet effet. Les automates 31 et 32 peuvent être munis de modules d'extension de leurs fonctionnalités. Les automates 31 et 32 ont des borniers débrochables pour faciliter la maintenance. Les automates 31 et 32 sont compacts, avec des dimensions qui sont par exemple de l'ordre de 160 mm de largeur, 120 mm de hauteur et 90 mm de profondeur (hors modules d'extension), et donc faciles à intégrer au système 20 équipant la chaudière 1. Les automates 31 et 32 sont puissants, adaptés pour réaliser des calculs complexes et présentent une mémoire importante. Les automates 31 et 32 sont robustes, munis de transistors et relais de sortie renforcés, ce qui augmente leur longévité. Les automates 31 et 32 peuvent être programmés de manière simple, par exemple à l'aide d'un logiciel structuré selon la norme IEC 1131-3 définissant cinq langages de programmation d'automatismes. Pour renforcer la sécurité, l'accès aux automates 31 et 32 est protégé, de sorte qu'il est impossible de se connecter pour lire ou modifier le programme et forcer les sorties. Seul le détenteur du programme source a accès aux automates 31 et 32.

De plus, l'un des automates 31 et 32 peut être programmé en tant qu'automate principal, par exemple l'automate 31. Dans ce cas, cet automate 31 est programmé avec l'algorithme de gestion des tests périodiques et réalise le décompte des 72 heures entre chaque intervention. Cet automate 31 est également prévu pour traiter la régulation de la conductivité C3 mesurée par la sonde 43. Par ailleurs, cet automate 31 peut être prévu pour gérer les extractions de fonds dans la chaudière 1. En particulier, sur les chaudières à forte concentration, des extractions régulières sont recommandées.

Au sein du système de contrôle 20, d'une part, la chaîne 21 et l'automate 31 et, d'autre part, la chaîne 22 et l'automate 32, constituent des chaînes automates 21+31 et 22+32 entièrement redondantes, de la mesure aux dispositifs de protection et aux accessoires. Ces chaînes automates 21+31 et 22+32 permettent une vérification automatique et continue des mesures effectuée par les capteurs, ainsi qu'une comparaison de ces mesures entre elles. En outre, ces chaînes automates 21+31 et 22+32 permettent le déclenchement de différentes alertes de sécurité lorsqu'un fonctionnement anormal de la chaudière 1 est détecté, notamment pour demander une intervention de maintenance avant qu'une panne ne survienne. Dans le mode présence permanente, l'une des chaînes automates 21+31 ou 22+32 peut être désactivée, tandis que l'autre chaîne automate assure un contrôle satisfaisant de la chaudière 1.

De préférence, le système 20 est paramétré pour que les automates 31 et 32 détectent que la chaudière 1 fonctionne anormalement si les chaînes de mesure 21 et 22 ont mesuré un écart supérieur à 10% entre l'un des paramètres caractéristiques N1 ou P1 de la première partie 11+14 et l'un des paramètres caractéristiques N2 ou P2 de la deuxième partie 12+15 de la chaudière 1. Plus précisément, la comparaison est réalisée entre, d'une part, les paramètres N1 et N2 et, d'autre part, les paramètres P1 et P2. En outre, par sécurité, le système 20 permet de détecter un fonctionnement anormal de la chaudière 1 grâce aux sondes 43 et 44. Par ailleurs, le système 20 peut détecter un fonctionnement anormal des chaînes de mesure 21 et 22, en cas de valeurs mesurée nulle ou improbable. Le système 20 est également prévu pour contrôler la présence des capteurs 41 à 44, 51 et 52, ce qui empêche de shunter ces capteurs et améliore encore la sécurité.

Le terminal de pilotage 60 fournit une interface simple et pratique à utiliser pour l'exploitant et l'opérateur de maintenance. Le terminal 60 comprend au moins un écran d'affichage et des moyens de communication. En particulier, le terminal 60 est configuré pour communiquer de manière bidirectionnelle avec les automates 31 et 32, afin d'échanger des informations relatives aux éléments constitutifs du système 20 et au fonctionnement la chaudière 1. Autrement dit, le terminal 60 permet le pilotage du système 20 et de la chaudière 1. En outre, le terminal 60 est adapté pour communiquer avec tous types de dispositifs, par exemple un serveur internet et/ou courriel 61, un dispositif de télégestion 62, un ordinateur de supervision 63, un brûleur à came numérique 64 intégré à la chaudière 1, un dispositif de comptage 65 et/ou un dispositif amovible de sauvegarde 66. En particulier, le terminal 60 peut communiquer avec les équipements de la chaudière 1, tels que la came numérique du brûleur 64 mentionné ci-dessus, un dispositif d'analyse du dioxygène ou un dispositif régulateur, et transmettre les informations recueillies via un protocole de communication adapté à la présente application. Dans le cadre de l'invention, le système 20 peut communiquer vers un opérateur via le terminal 60 et les dispositifs associés de manière simple et pratique, notamment par une connexion internet, un envoi de courriel ou de messages textuels (SMS). Sur le terminal 60 ou à distance, il est prévu de visualiser sous forme de courbes ou tableaux les mesures de niveau d'eau, de pression, de conductivité de la chaudière, sur les dernières 72 heures ou même antérieurement. Egalement, un historique des alertes de sécurité peut être tenu. Le terminal 60 permet l'affichage de flashs sécurités lors des visites périodiques prévues toutes les 72 heures, avec des tableaux de bord simplifiés montrant le fonctionnement des différents éléments du système 20, de la chaudière 1 et les alarmes en cours.

Les étapes du procédé de contrôle selon l'invention sont détaillées ci-après.

En premier lieu, lors d'une étape préliminaire, le système 20 est intégré à une installation sous pression 1, notamment une nouvelle chaudière ou une chaudière existante. Dans le cas d'une nouvelle chaudière, d'après la Directive 97/23/CE, l'exploitation requiert une surveillance selon une périodicité et des modalités définies dans la notice d'instructions du constructeur de la chaudière. Dans le cas d'une chaudière existante, d'après le Décret de 1926 et la Directive 97/23/CE, l'exploitant peut modifier les modalités d'exploitation si, d'une part, il respecte un niveau de sécurité au moins équivalent (NFE32020 ou MD15) et, d'autre part, l'intervalle entre deux vérifications ne dépasse pas 72 heures. Pour encadrer la mise en application en France, un cahier des charges AQUAP 2007/01 a été établi par les organismes de contrôles. Dans d'autres pays d'Europe, des réglementations similaires définissent le cadre de mise en oeuvre de la présente invention.

Dans une étape de mesure, des paramètres caractéristiques N1, P1, N2 et P2 de la chaudière 1 sont mesurés via les deux chaînes de mesure 21 et 22 indépendantes. La première chaîne 21 équipe la première partie 11+14 de la chaudière 1 et mesure les paramètres N1 et P1 caractéristiques du fonctionnement de cette première partie 11+14. La deuxième chaîne de mesure 22 équipe la deuxième partie 12+15 de la chaudière 1 et mesure les paramètres N2 et P2 caractéristiques du fonctionnement de cette deuxième partie 12 et 15. Plus précisément, chaque chaîne 21 et 22 mesure au moins un niveau de fluide N1 ou N2 et une pression P1 ou P2 dans la chaudière 1. Les mesures sont de préférence analogiques et continues, ou peuvent être discrètes, en fonction notamment des capteurs 41, 42, 51 et 52 équipant les chaînes 21 et 22. En alternative ou en complément, d'autres paramètres caractéristiques peuvent être mesurés par les chaînes 21 et 22 ou en parallèle des chaînes 21 et 22, par exemple la conductivité C3 à l'aide du capteur 43 ou le niveau N3 à l'aide du capteur 44.

Dans une étape de comparaison, les deux automates 31 et 32 en communication comparent les paramètres, N1 avec N2, P1 avec P2, caractéristiques du fonctionnement de la première partie 11+14 et de la deuxième partie 12+15 pour détecter un fonctionnement anormal de la chaudière 1. Cette étape de comparaison est réalisée de manière continue en parallèle de l'étape de mesure. Autrement dit, les étapes de mesure et de comparaison sont simultanées. Avantageusement, un fonctionnement anormal de la chaudière 1 est détecté par les automates 31 et 32 si les chaînes de mesure 21 et 22 ont mesuré un écart supérieur à 10% entre l'un des paramètres caractéristiques N1 ou P1 de la première partie 11+14 et l'un des paramètres caractéristiques N2 ou P2 de la deuxième partie 12+15 de la chaudière 1. Plus précisément, le niveau N1 est comparé avec le niveau N2, tandis que la pression P1 est comparée avec la pression P2. En outre, les automates 31 et 32 peuvent comparer les mesures par rapport à des valeurs de référence prédéterminées, par exemple pour détecter un dysfonctionnement de l'un des capteurs 41 à 44, 51 ou 52.

Ensuite, une étape de signalement est réalisée si un fonctionnement anormal de la chaudière 1 ou des chaînes de mesure 21 et 22 est détecté dans l'étape de comparaison. Cette étape de signalement consiste à transmettre une alerte de sécurité depuis au moins l'un des deux automates 31 et 32 vers le terminal de pilotage 60 en vue d'une intervention de maintenance. Les alertes peuvent être de différents types, en fonction du dysfonctionnement détecté et de l'urgence de l'intervention. Le terminal 60 peut communiquer les alertes à un opérateur distant. En alternative ou de préférence en complément, l'étape de signalement consiste à activer, via les deux automates 31 et 32, des moyens de protection équipant la chaudière 1. En particulier, la détection d'un niveau de fluide N1 ou N2 anormal provoque une remise à niveau du fluide dans les bouteilles 11 ou 12 concernées de la chaudière 1, tandis que la détection d'une pression P1 ou P2 anormale provoque un verrouillage de sécurité dans la chaudière 1.

Enfin, lors d'une étape de maintenance, l'opérateur intervient en mode présence permanente. Dans ce cas, il peut être amené à désactiver l'une des chaînes automates 21+31 ou 22+32 durant l'intervention. Avantageusement, grâce à l'invention, l'autre chaîne automate continue alors de fonctionner. Si l'opérateur d'astreinte n'intervient pas sous 2 heures, la chaudière 1 peut passer mode sécurité par mesure de précaution.

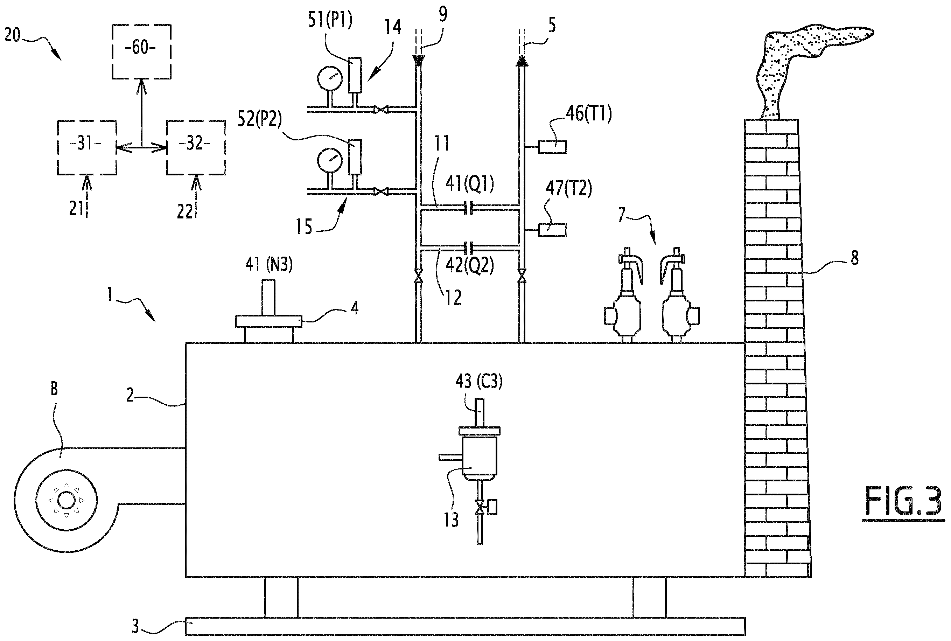

Sur la figure 3 est représentée une installation sous pression, du type installation de chaudière 1 à production d'eau surchauffée, conforme à l'invention. Cette chaudière 1 est équipée d'un système de contrôle 20 conforme à l'invention, configuré pour cette application spécifique.

Certains éléments constitutifs de la chaudière 1 et du système de contrôle 20 de la figure 3 sont similaires au premier mode de réalisation, décrit plus haut en référence aux figures 1 et 2, et comportent les mêmes références numériques. Les différences avec le premier mode de réalisation sont détaillées ci-après.

La chaudière 1 comprend une conduite de sortie 5 et une conduite d'entrée 9, auxquelles sont raccordés des conduites hydrauliques 11, 12, 14 et 15. Les conduites 11 et 12 relient les conduites 5 et 9, tandis que les conduites 14 et 15 sont raccordées à la conduite 9. Les conduites 11 et 12 sont équipées de capteurs 41 et 42 de circulation de fluide, également appelés capteurs de débit Q1 et Q2. Ces capteurs 41 et 42 de débit Q1 et Q2 remplacent les sondes 41 et 42 de niveau de fluide N1 et N2 du premier mode de réalisation. Les conduites 14 et 15 sont équipées de capteurs 51 et 52 de pression P1 ou P2, comme dans le premier mode de réalisation. La conduite 5 est également équipée de capteurs 46 et 47 de température T1 et T2.

En alternative, les conduites 11 et 12 peuvent être raccordées en un autre emplacement du corps 2 de la chaudière 1, par exemple au voisinage du dispositif de purge 13.

Au sein du système de contrôle 20 de la figure 3, chaque chaîne de mesure 21 ou 22 comprend donc un capteur 41 ou 42 de débit de fluide Q1 ou Q2 et un capteur 51 ou 52 de pression P1 ou P2. La détection d'un débit de fluide Q1 ou Q2 anormal et/ou d'une pression P1 ou P2 anormale provoque un verrouillage de sécurité dans l'installation 1. Ce système 20 comprend d'autres éléments constitutifs et est raccordé à un terminal de pilotage 60, comme sur la figure 2.

Par ailleurs, l'installation 1 et/ou le système 20 peuvent être conformés différemment des figures 1 à 3 sans sortir du cadre de l'invention. En particulier, les chaînes de mesure 21 et 22, les automates 31 et 32 et le terminal 60 peuvent présenter toute configuration adaptée à la présente application.

En variante non représentée, l'installation 1 peut être de tout type nécessitant un système de contrôle 20 en vue d'assurer une maintenance périodique.

Selon une autre variante non représentée, l'un des automates 31 ou 32 peut être configuré pour collecter des informations additionnelles et les transmettre au terminal 60, par exemple des informations relatives au brûleur B et aux communs. Le traitement de ces informations additionnelles n'est pas imposé par la réglementation, mais permet leur restitution sous forme de synoptiques ou d'alarmes de sécurité, sans action de verrouillage ou de dérive.

Selon une autre variante non représentée, le terminal 60 peut directement intégrer un serveur internet et/ou courriel 61, un dispositif de télégestion 62, un ordinateur de supervision 63 et/ou un dispositif amovible de sauvegarde 66.

Selon une autre variante non représentée, le système de contrôle 20 peut comprendre trois automates programmables A, B et C, similaires aux automates 31 et 32. Le système 20 comprend alors trois chaines de mesure, ou chaines de sécurité, chacune équipée de ses propres capteurs (niveau, pression et conductivité pour une chaudière à production de vapeur ; température, débit et pression pour une chaudière à production d'eau surchauffée). Cette configuration permet, lors d'un fonctionnement sans présence humaine, d'éviter un arrêt de la chaudière lors du dysfonctionnement d'une chaine de sécurité parmi les trois. L'automate A assure la régulation et la sécurité de la chaudière. L'automate B assure également la régulation et la sécurité de la chaudière. L'automate C assure uniquement la sécurité de la chaudière. Le système de contrôle procure une redondance automatique sur la régulation et une chaine de sécurité supplémentaires pour augmenter la disponibilité de l'installation. A titre d'exemple, en cas de perte de l'automate A, la régulation qui était assuré par cet automate A bascule automatiquement vers l'automate B (redondance) et la deuxième chaîne de sécurité obligatoire pour un fonctionnement sans présence humaine est alors celle qui est raccordée à l'automate C. Cette configuration permet ainsi de maintenir le fonctionnement de la chaudière en l'absence d'un automate ou en cas de défaillance d'un capteur.

## Revendications

1. Système (20) de contrôle d'une installation sous pression (1), hors périmètre nucléaire, notamment une installation de chaudière adaptée pour exploitation sans présence humaine permanente, **caractérisé**
**en ce qu'**il comprend au moins :
- deux chaînes de mesure (21, 22) indépendantes, parmi lesquelles :
- une première chaîne de mesure (21) est adaptée pour équiper une première partie (11, 14) de l'installation (1) et mesurer des paramètres (N1, P1 ; Q1, P1) caractéristiques du fonctionnement de cette première partie (11, 14), et
- une deuxième chaîne de mesure (22) est adaptée pour équiper une deuxième partie (12, 15) de l'installation (1) et mesurer des paramètres (N2, P2 ; Q2, P2) caractéristiques du fonctionnement de cette deuxième partie (12, 15),
- deux automates (31, 32) programmables, parmi lesquels un premier automate (31) est raccordé à la première chaîne de mesure (21) et un deuxième automate (32) est raccordé à la deuxième chaîne de mesure (22), les deux automates (31, 32) en communication comparant les paramètres caractéristiques (N1, P1 ; Q1, P1) de la première partie (11, 14) et les paramètres caractéristiques (N2, P2 ; Q2, P2) de la deuxième partie (12, 15) pour détecter un fonctionnement anormal de l'installation (1) ou des chaînes de mesure (21, 22), de manière à transmettre une alerte de sécurité en vue d'une intervention de maintenance et/ou à activer des moyens de protection équipant l'installation (1) ; et
- un terminal (60) de pilotage du système de contrôle (20), en communication avec au moins l'un des deux automates (31, 32), recevant l'alerte de sécurité si un fonctionnement anormal de l'installation (1) est détecté,
**en ce que** chaque chaîne de mesure (21 ; 22) comprend un capteur (41 ; 42) de niveau de fluide (N1 ; N2) et un capteur (51 ; 52) de pression (P1 ; P2), agencés dans la partie (11, 14 ; 12, 15) de l'installation (1) équipée de cette chaîne de mesure (21 ; 22), la détection d'un niveau de fluide (N1 ; N2) anormal provoquant une remise à niveau du fluide dans la partie (11, 14; 12, 15) concernée de l'installation (1), la détection d'une pression (P1 ; P2) anormale provoquant un verrouillage de sécurité dans l'installation (1)
et **en ce que** chaque chaîne de mesure (21 ; 22) comprend un capteur de débit de fluide (Q1 ; Q2) et un capteur (51 ; 52) de pression (P1 ; P2), agencés dans la partie (11, 14 ; 12, 15) de l'installation (1) équipée de cette chaîne de mesure (21 ; 22), la détection d'un débit de fluide (Q1 ; Q2) anormal et/ou d'une pression (P1 ; P2) anormale provoquant un verrouillage de sécurité dans l'installation (1).

2. Système de contrôle (20) selon la revendication 1, **caractérisé en ce qu'**il comprend également des moyens (43) de mesure de conductivité d'un fluide (C3) dans l'installation (1), raccordés à au moins l'un des deux automates (31, 32), de préférence à la fois au premier automate (31) et au deuxième automate (32), la détection d'une conductivité anormale provoquant une purge de l'installation (1).

3. Système de contrôle (20) selon l'une des revendications précédentes, **caractérisé en ce qu'**il comprend des moyens additionnels (44) de mesure d'un niveau de fluide (N3) dans l'installation (1), ces moyens de mesure comprenant un capteur auxiliaire (44) raccordé à au moins l'un des deux automates (31, 32) et adapté pour mesurer le niveau de fluide (N3) lorsque l'autre des deux automates (31, 32) est désactivé durant une intervention de maintenance.

4. Système de contrôle (20) selon l'une des revendications précédentes, **caractérisé en ce que** le terminal de pilotage (60) est adapté pour transmettre l'alerte et/ou les paramètres caractéristiques à au moins un dispositif auxiliaire (61, 62, 63, 64, 65, 66), par exemple un serveur internet et/ou courriel (61), un dispositif de télégestion (62), un ordinateur de supervision (63), un brûleur à came numérique (64) intégré à l'installation (1), un dispositif de comptage (65) et/ou un dispositif amovible de sauvegarde (66).

5. Système de contrôle (20) selon l'une des revendications précédentes, **caractérisé en ce qu'**il comprend trois chaînes de mesure indépendantes et trois automates programmables, chacun raccordé à une chaine de mesure, avec deux automates qui assurent la régulation et la sécurité de l'installation (1) tandis que le troisième automate assure uniquement la sécurité de l'installation (1).

6. Système de contrôle (20) selon l'une des revendications précédentes, **caractérisé en ce que** les moyens de protection comprennent au moins :
- un dispositif de remise à niveau du fluide dans l'installation (1),
- un dispositif à relais avec contrôle de position, adapté pour réaliser un verrouillage de sécurité dans l'installation (1), et
- un dispositif de purge de l'installation (1).

7. Procédé de contrôle d'une installation sous pression (1), hors périmètre nucléaire, notamment une installation de chaudière adaptée pour exploitation sans présence humaine permanente, le procédé étant **caractérisé**
**en ce qu'**il comprend au moins les étapes suivantes :
- une étape de mesure de paramètres (N1, P1 ; N2, P2 ; Q1, P1 ; Q2, P2) caractéristiques de l'installation (1) via deux chaînes de mesure (21, 22) indépendantes, parmi lesquelles :
- une première chaîne de mesure (21) équipe une première partie (11, 14) de l'installation (1) et mesure des paramètres (N1, P1 ; Q1, P1) parmi lesquels au moins un niveau de fluide (N1), une pression (P1) et un débit de fluide (Q1) dans l'installation (1), ces paramètres étant caractéristiques du fonctionnement de cette première partie (11, 14), et
- une deuxième chaîne de mesure (22) équipe une deuxième partie (12, 15) de l'installation (1) et mesure des paramètres (N2, P2 ; Q2, P2) parmi lesquels au moins un niveau de fluide (N2), une pression (P2) et un débit de fluide (Q2) dans l'installation (1), ces paramètres étant caractéristiques du fonctionnement de cette deuxième partie (12, 15) ;
- une étape de comparaison des paramètres caractéristiques (N1 / N2 ; Q1 / Q2 ; P1 / P2) du fonctionnement de la première partie (11, 14) et de la deuxième partie (12, 15) pour détecter un fonctionnement anormal de l'installation (1), cette étape de comparaison étant réalisée de manière continue en parallèle de l'étape de mesure par l'intermédiaire de deux automates (31, 32) programmables en communication, parmi lesquels un premier automate (31) est raccordé à la première chaîne de mesure (21) et un deuxième automate (32) est raccordé à la deuxième chaîne de mesure (22) ;
- une étape de signalement, réalisée si un fonctionnement anormal de l'installation (1) ou des chaînes de mesure (21, 22) est détecté dans l'étape de comparaison, cette étape de signalement consistant à transmettre une alerte de sécurité depuis au moins l'un des deux automates (31, 32) vers un terminal de pilotage (60) en vue d'une intervention de maintenance et/ou à activer via les deux automates (31, 32) des moyens de protection équipant l'installation (1),
et **en ce que** :
- dans l'étape de signalement, la détection d'un niveau de fluide (N1 ; N2) anormal provoque une remise à niveau du fluide dans la partie (11 ; 12) concernée de l'installation (1), tandis que la détection d'un débit de fluide (Q1 ; Q2) anormal et/ou d'une pression (P1 ; P2) anormale provoque un verrouillage de sécurité dans l'installation (1).

8. Procédé de contrôle selon la revendication 7, **caractérisé en ce que** dans l'étape de comparaison, un fonctionnement anormal de l'installation (1) est détecté par les automates (31, 32) si les chaînes de mesure (21, 22) ont mesuré un écart supérieur à 10% entre l'un des paramètres caractéristiques (N1, P1 ; Q1, P1) de la première partie (11, 14) et l'un des paramètres caractéristiques (N2, P2 ; Q2, P2) de la deuxième partie (12, 15) de l'installation (1).

9. Procédé de contrôle selon l'une des revendications 7 et 8, **caractérisé en ce que** ce que l'étape de mesure de paramètres caractéristiques de l'installation (1) est réalisée via trois chaînes de mesure indépendantes ; et **en ce que** l'étape de comparaison des paramètres caractéristiques est réalisée par l'intermédiaire de trois automates programmables, chacun raccordé à une chaine de mesure, avec deux automates qui assurent la régulation et la sécurité de l'installation (1) tandis que le troisième automate assure uniquement la sécurité de l'installation (1).

10. Installation sous pression, hors périmètre nucléaire, notamment installation de chaudière (1) adaptée pour exploitation sans présence humaine permanente, **caractérisée en ce qu'**elle est équipée d'un système de contrôle (20) selon l'une des revendications 1 à 6.

## Patentansprüche

1. Kontrollsystem (20) für eine Anlage (1) unter Druck außerhalb des kerntechnischen Bereichs, insbesondere für eine Kesselanlage, die zum Betrieb ohne dauerhafte menschliche Anwesenheit ausgebildet ist, **dadurch gekennzeichnet,**
**dass** das Kontrollsystem zumindest Folgendes umfasst:
- zwei unabhängige Messketten (21, 22), von denen:
- -eine erste Messkette (21) in einem ersten Abschnitt (11, 14) der Anlage (1) vorgesehen und zum Messen der kennzeichnenden Betriebsparameter (N1, P1; Q1, P1) dieses ersten Abschnitts (11, 14) ausgebildet ist und
- eine zweite Messkette (22) in einem zweiten Abschnitt (12, 15) der Anlage (1) vorgesehen und zum Messen der kennzeichnenden Betriebsparameter (N2, P2; Q2, P2) dieses zweiten Abschnitts (12, 15) ausgebildet ist,
- zwei speicherprogrammierbare Steuerungen (31, 32), von denen eine erste Steuerung (31) mit der ersten Messkette (21) verbunden ist und eine zweite Steuerung (32) mit der zweiten Messkette (22) verbunden ist, wobei die beiden miteinander kommunizierenden Steuerungen (31, 32) die kennzeichnenden Betriebsparameter (N1, P1; Q1, P1) des ersten Abschnitts (11, 14) und die kennzeichnenden Betriebsparameter (N2, P2; Q2, P2) des zweiten Abschnittes (12, 15) zur Erkennung eines anormalen Betriebs der Anlage (1) oder der Messketten (21, 22) vergleichen, um einen Sicherheitsalarm zwecks Instandsetzungsarbeiten zu übertragen und/oder in der Anlage (1) vorgesehene Schutzeinrichtungen zu aktivieren; und
- ein Steuerungssystem (60) des Kontrollsystems (20), welches mit mindestens einer der beiden Steuerungen (31, 32) kommuniziert und bei Erkennung eines anormalen Betriebs der Anlage (1) den Sicherheitsalarm empfängt,
**dass** jede Messkette (21; 22) einen Sensor (41; 42) für den Fluidstand (N1; N2) und einen Sensor (51; 52) für den Druck (P1; P2) umfasst, die in dem mit der jeweiligen Messkette (21; 22) versehenen Abschnitt (11, 14; 12, 15) der Anlage (1) angeordnet sind, wobei die Erkennung eines anormalen Fluidstands (N1; N2) eine Wiederherstellung des Fluidstands in dem betroffenen Abschnitt (11, 14; 12, 15) der Anlage (1) auslöst und die Erkennung eines anormalen Drucks (P1; P2) eine Sicherheitsverriegelung in der Anlage (1) auslöst,
und **dass** jede Messkette (21; 22) einen Sensor für den Fluiddurchfluss (Q1; Q2) und einen Sensor (51; 52) für den Druck (P1; P2) umfasst, die in dem mit der jeweiligen Messkette (21; 22) versehenen Abschnitt (11, 14; 12, 15) der Anlage (1) angeordnet sind, wobei die Erkennung eines anormalen Fluiddurchflusses (Q1; Q2) und/oder eines anormalen Drucks (P1; P2) eine Sicherheitsverriegelung in der Anlage (1) auslöst.

2. Kontrollsystem (20) nach Anspruch 1, **dadurch gekennzeichnet, dass** das Kontrollsystem des Weiteren Messeinrichtungen (43) zum Messen der Leitfähigkeit eines Fluids (C3) in der Anlage (1) umfasst, die mit mindestens einer der beiden Steuerungen (31, 32), vorzugsweise sowohl mit der ersten Steuerung (31) als auch mit der zweiten Steuerung (32), verbunden sind, wobei die Erkennung einer anormalen Leitfähigkeit eine Entleerung der Anlage (1) auslöst.

3. Kontrollsystem (20) nach einem der vorhergehenden Ansprüche, **dadurch gekennzeichnet, dass** das Kontrollsystem zusätzliche Messeinrichtungen (44) zum Messen eines Fluidstands (N3) in der Anlage (1) umfasst, wobei die Messeinrichtungen einen mit mindestens einer der beiden Steuerungen (31, 32) verbundenen Hilfssensor (44) umfassen, der zum Messen des Fluidstands (N3) ausgebildet ist, wenn eine der beiden Steuerungen (31, 32) während eines Wartungsvorgangs abgeschaltet ist.

4. Kontrollsystem (20) nach einem der vorhergehenden Ansprüche, **dadurch gekennzeichnet, dass** das Steuerungssystem (60) zum Übermitteln des Alarms und/oder der kennzeichnenden Betriebsparameter an mindestens eine Hilfsvorrichtung (61, 62, 63, 64, 65, 66), zum Beispiel einen Internet- und/oder Mail-Server (61), eine Fernverwaltungsvorrichtung (62), einen Überwachungsrechner (63), einen in der Anlage (1) integrierten Brenner (64) mit elektronischer Verbundsteuerung (frz.: *brûleur à came numérique*), eine Zählervorrichtung (65) und/oder eine abnehmbare Sicherungsvorrichtung (66) ausgebildet ist.

5. Kontrollsystem (20) nach einem der vorhergehenden Ansprüche, **dadurch gekennzeichnet, dass** das Kontrollsystem drei unabhängige Messketten und drei jeweils mit einer Messkette verbundene speicherprogrammierbare Steuerungen umfasst, wobei zwei Steuerungen die Regelung und die Sicherheit der Anlage (1) gewährleisten, während die dritte Steuerung ausschließlich die Sicherheit der Anlage (1) gewährleistet.

6. Kontrollsystem (20) nach einem der vorhergehenden Ansprüche, **dadurch gekennzeichnet, dass** die Schutzeinrichtungen zumindest Folgendes umfassen:
- eine Vorrichtung zum Wiederherstellen des Fluidstands in der Anlage (1),
- eine Relaisvorrichtung mit Positionskontrolle, die zum Herstellen einer Sicherheitsverriegelung in der Anlage (1) ausgebildet ist, und
- eine Vorrichtung zur Entleerung der Anlage (1).

7. Kontrollverfahren für eine Anlage unter Druck (1) außerhalb des kerntechnischen Bereichs, insbesondere für eine Kesselanlage, die zum Betrieb ohne dauerhafte menschliche Anwesenheit ausgebildet ist, wobei das Verfahren **dadurch gekennzeichnet ist, dass** es zumindest die folgenden Schritte umfasst:
- einen Messschritt zum Messen der die Anlage (1) kennzeichnenden Betriebsparameter (N1, P1; N2, P2; Q1, P1; Q2, P2) über zwei unabhängige Messketten (21, 22), von denen:
- eine erste Messkette (21) in einem ersten Abschnitt (11, 14) der Anlage (1) vorgesehen ist und die Betriebsparameter (N1, P1; Q1, P1) misst, darunter zumindest einen Fluidstand (N1), einen Druck (P1) und einen Fluiddurchfluss (Q1) in der Anlage (1), wobei diese Betriebsparameter für den Betrieb dieses ersten Abschnitts (11, 14) kennzeichnend sind, und
- eine zweite Messkette (22) in einem zweiten Abschnitt (12, 15) der Anlage (1) vorgesehen ist und die Betriebsparameter (N2, P2; Q2, P2) misst, darunter zumindest einen Fluidstand (N2), einen Druck (P2) und einen Fluiddurchfluss (Q2) in der Anlage (1), wobei diese Betriebsparameter für den Betrieb dieses zweiten Abschnitts (12, 15) kennzeichnend sind;
- einen Vergleichsschritt zum Vergleichen der kennzeichnenden Betriebsparameter (N1/N2; Q1/Q2; P1/P2) des Betriebs des ersten Abschnitts (11, 14) und des zweiten Abschnitts (12, 15) zur Erkennung eines anormalen Betriebs der Anlage (1), wobei der Vergleichsschritt kontinuierlich und parallel zu dem Messschritt über zwei miteinander verbundene speicherprogrammierbare Steuerungen (31, 32) erfolgt, von denen eine erste Steuerung (31) mit der ersten Messkette (21) verbunden ist und eine zweite Steuerung (32) mit der zweiten Messkette (22) verbunden ist;
- einen Signalisierungsschritt, der erfolgt, wenn in dem Vergleichsschritt ein anormaler Betrieb der Anlage (1) oder der Messketten (21, 22) erkannt wird, wobei der Signalisierungsschritt darin besteht, dass zwecks Instandsetzungsarbeiten ein Sicherheitsalarm von mindestens einer der beiden Steuerungen (31, 32) an ein Steuerungssystem (60) übermittelt wird und/oder über die beiden Steuerungen (31, 32) in der Anlage (1) vorgesehene Schutzeinrichtungen aktiviert werden,
und dadurch, dass:
- in dem Signalisierungsschritt die Erkennung eines anormalen Fluidstands (N1; N2) eine Wiederherstellung des Fluidstands in dem betroffenen Abschnitt (11, 12) der Anlage (1) auslöst, während die Erkennung eines anormalen Fluiddurchflusses (Q1; Q2) und/oder eines anormalen Drucks (P1; P2) eine Sicherheitsverriegelung in der Anlage (1) auslöst.

8. Kontrollverfahren nach Anspruch 7, **dadurch gekennzeichnet, dass** in dem Vergleichsschritt ein anormaler Betrieb der Anlage (1) durch die Steuerungen (31, 32) erkannt wird, wenn die Messketten (21, 22) einen Unterschied von mehr als 10 % zwischen einem der kennzeichnenden Betriebsparameter (N1, P1; Q1, P1) des ersten Abschnitts (11, 14) und einem der kennzeichnenden Betriebsparameter (N2, P2; Q2, P2) des zweiten Abschnitts (12, 15) der Anlage (1) messen.

9. Kontrollverfahren nach einem der Ansprüche 7 oder 8, **dadurch gekennzeichnet, dass** der Schritt des Messens der kennzeichnenden Betriebsparameter der Anlage (1) über drei unabhängige Messketten erfolgt; und dass der Schritt des Vergleichens der kennzeichnenden Betriebsparameter mittels dreier speicherprogrammierbarer Steuerungen erfolgt, die jeweils mit einer Messkette verbunden sind, wobei zwei Steuerungen die Regelung und die Sicherheit der Anlage (1) gewährleisten, während die dritte Steuerung ausschließlich die Sicherheit der Anlage (1) gewährleistet.

10. Anlage unter Druck, außerhalb des kerntechnischen Bereichs, insbesondere eine Kesselanlage (1), die zum Betrieb ohne dauerhafte menschliche Anwesenheit ausgebildet ist, **dadurch gekennzeichnet, dass** die Anlage mit einem Kontrollsystem (20) nach einem der Ansprüche 1 bis 6 versehen ist.

## Claims

1. System (20) for controlling a facility under pressure (1), other than a nuclear facility, especially a boiler facility adapted for use without permanent human presence, **characterised**
**in that** it comprises at least:
- two independent measuring chains (21, 22), of which:
- a first measuring chain (21) is adapted to equip a first part (11, 14) of the facility (1) and to measure parameters (N1, P1; Q1, P1) which are characteristic of the functioning of this first part (11, 14), and
- a second measuring chain (22) is adapted to equip a second part (12, 15) of the facility (1) and to measure parameters (N2, P2; Q2, P2) which are characteristic of the functioning of this second part (12, 15),
- two programmable logic controllers (31, 32), of which a first logic controller (31) is connected to the first measuring chain (21) and a second logic controller (32) is connected to the second measuring chain (22), the two logic controllers (31, 32) in communication comparing the characteristic parameters (N1, P1; Q1, P1) of the first part (11, 14) and the characteristic parameters (N2, P2; Q2, P2) of the second part (12, 15) in order to detect abnormal functioning of the facility (1) or of the measuring chains (21, 22), so as to transmit a safety warning with a view to a maintenance operation and/or to activate protection means with which the facility (1) is equipped;
and
- a terminal (60) for controlling the control system (20), which terminal is in communication with at least one of the two logic controllers (31, 32) and receives the safety warning if abnormal functioning of the facility (1) is detected,
**in that** each measuring chain (21; 22) comprises a fluid level (N1; N2) sensor (41; 42) and a pressure (P1; P2) sensor (51; 52) which are arranged in the part (11, 14; 12, 15) of the facility (1) that is equipped with that measuring chain (21; 22), detection of an abnormal fluid level (N1; N2) causing the fluid level in the part (11, 14; 12, 15) of the facility (1) in question to be restored, detection of an abnormal pressure (P1; P2) causing a safety lock in the facility (1),
and **in that** each measuring chain (21; 22) comprises a fluid flow rate (Q1; Q2) sensor and a pressure (P1; P2) sensor (51; 52) which are arranged in the part (11, 14; 12, 15) of the facility (1) that is equipped with that measuring chain (21; 22), detection of an abnormal fluid flow rate (Q1; Q2) and/or of an abnormal pressure (P1; P2) causing a safety lock in the facility (1).

2. Control system (20) according to claim 1, **characterised in that** it also comprises means (43) for measuring the conductivity of a fluid (C3) in the facility (1), which means are connected to at least one of the two logic controllers (31, 32), preferably to both the first logic controller (31) and the second logic controller (32), detection of abnormal conductivity causing the facility (1) to be purged.

3. Control system (20) according to any one of the preceding claims, **characterised in that** it comprises additional means (44) for measuring a fluid level (N3) in the facility (1), these measuring means comprising an auxiliary sensor (44) which is connected to at least one of the two logic controllers (31, 32) and adapted to measure the fluid level (N3) when the other of the two logic controllers (31, 32) is deactivated during a maintenance operation.

4. Control system (20) according to any one of the preceding claims, **characterised in that** the control terminal (60) is adapted to transmit the warning and/or the characteristic parameters to at least one auxiliary device (61, 62, 63, 64, 65, 66), for example an internet and/or email server (61), a remote management device (62), a supervisory computer (63), a burner with a digital cam (64) integrated into the facility (1), a counting device (65) and/or a removable backup device (66).

5. Control system (20) according to any one of the preceding claims, **characterised in that** it comprises three independent measuring chains and three programmable logic controllers, each connected to a measuring chain, with two logic controllers which ensure the regulation and safety of the facility (1) while the third logic controller ensures only the safety of the facility (1).

6. Control system (20) according to any one of the preceding claims, **characterised in that** the protection means comprise at least:
- a device for restoring the fluid level in the facility (1),
- a relay device with position control, adapted to effect a safety lock in the facility (1), and
- a device for purging the facility (1).

7. Method for controlling a facility (1) under pressure, other than a nuclear facility, especially a boiler facility adapted for use without permanent human presence, the method being **characterised**
**in that** it comprises at least the following steps:
- a step of measuring parameters (N1, P1; N2, P2; Q1, P1; Q2, P2) which are characteristic of the facility (1) *via* two independent measuring chains (21, 22), of which:
- a first measuring chain (21) equips a first part (11, 14) of the facility (1) and measures parameters (N1, P1; Q1, P1) including at least a fluid level (N1), a pressure (P1) and a fluid flow rate (Q1) in the facility (1), these parameters being characteristic of the functioning of this first part (11, 14), and
- a second measuring chain (22) equips a second part (12, 15) of the facility (1) and measures parameters (N2, P2; Q2, P2) including at least a fluid level (N2), a pressure (P2) and a fluid flow rate (Q2) in the facility (1), these parameters being characteristic of the functioning of this second part (12, 15);
- a step of comparing the characteristic parameters (N1 / N2; Q1 / Q2; P1 / P2) of the functioning of the first part (11, 14) and of the second part (12, 15) in order to detect abnormal functioning of the facility (1), this comparison step being carried out continuously in parallel with the measuring step by way of two programmable logic controllers (31, 32) in communication, of which a first logic controller (31) is connected to the first measuring chain (21) and a second logic controller (32) is connected to the second measuring chain (22);
- a signalling step, which is carried out if abnormal functioning of the facility (1) or of the measuring chains (21, 22) is detected in the comparison step, this signalling step consisting in transmitting a safety warning from at least one of the two logic controllers (31, 32) to a control terminal (60) with a view to a maintenance operation and/or in activating, *via* the two logic controllers (31, 32), protection means with which the facility (1) is equipped,
and **in that**:
- in the signalling step, the detection of an abnormal fluid level (N1; N2) causes the fluid level in the part (11; 12) of the facility (1) in question to be restored, while the detection of an abnormal fluid flow rate (Q1; Q2) and/or of an abnormal pressure (P1; P2) causes a safety lock in the facility (1).

8. Control method according to claim 7, **characterised in that**, in the comparison step, abnormal functioning of the facility (1) is detected by the logic controllers (31, 32) if the measuring chains (21, 22) have measured a difference of more than 10% between one of the characteristic parameters (N1, P1; Q1, P1) of the first part (11, 14) and one of the characteristic parameters (N2, P2; Q2, P2) of the second part (12, 15) of the facility (1).

9. Control method according to either claim 7 or claim 8, **characterised in that** the step of measuring characteristic parameters of the facility (1) is carried out *via* three independent measuring chains; and **in that** the step of comparing the characteristic parameters is carried out by way of three programmable logic controllers, each connected to a measuring chain, with two logic controllers which ensure the regulation and safety of the facility (1) while the third logic controller ensures only the safety of the facility (1).

10. Facility under pressure, other than a nuclear facility, especially boiler facility (1) adapted for use without permanent human presence, **characterised in that** it is equipped with a control system (20) according to any one of claims 1 to 6.
